# EUROPÄISCHE PATENTSCHRIFT

(11) **EP 1 614 502 B1**
(45) Veröffentlichungstag und Bekanntmachung des Hinweises auf die Patenterteilung: **15.04.2009**
(21) Anmeldenummer: 05104308.1
(22) Anmeldetag: 20.05.2005
(51) Int. Cl.: B23P 15/00, B29C 47/08, B29C 47/66, B30B 11/24

(54) **Gehäuse für einen Doppelschneckenextruder sowie Herstellungsverfahren**
Housing for a twin screw extruder and manufacturing method
Boîtier pour une extrudeuse à double vis et procédé de fabrication

(30) Priorität: 08.07.2004 AT 11602004
(43) Veröffentlichungstag der Anmeldung: 11.01.2006
(73) Patentinhaber: Theysohn Extrusionstechnik Gesellschaft m.b.H., 2100 Korneuburg (AT)
(72) Erfinder: Zahradnik, Rudolf, 2130, Mistelbach (AT)
(74) Vertreter: Müllner, Martin

(56) Entgegenhaltungen:
- EP-A- 1 336 465
- DE-U1- 29 913 316
- GB-A- 1 326 031
- US-A- 4 036 540
- US-A- 5 093 209
- US-A- 5 752 770
- PATENT ABSTRACTS OF JAPAN Bd. 017, Nr. 198 (M-1398), 19. April 1993 (1993-04-19) -& JP 04 344218 A (KUBOTA CORP), 30. November 1992 (1992-11-30)
- PATENT ABSTRACTS OF JAPAN Bd. 017, Nr. 248 (M-1411), 18. Mai 1993 (1993-05-18) -& JP 04 368834 A (KUBOTA CORP), 21. Dezember 1992 (1992-12-21)

## Beschreibung

### Technisches Gebiet

Die vorliegende Erfindung betrifft ein Verfahren zur Herstellung eines Gehäuses oder eines Gehäuseabschnitts für einen Doppelschneckenextruder, dessen überlappende Schneckenbohrungen entweder nur in radialen Teilabschnitten gehärtet sind oder dessen überlappende Schneckenbohrungen in radialen Teilbereichen eine dickere gehärtete Schicht aufweisen als in anderen radialen Teilbereichen. Sie betrifft weiters ein Gehäuse oder einen Gehäuseabschnitt für einen Doppelschneckenextruder, dessen überlappende Schneckenbohrungen nur in radialen Teilabschnitten gehärtet sind.

Ein solches Verfahren bzw. ein solches Gehäuse oder ein solcher Gehäuseabschnitt sind aus DE 29 913 316 U bekannt.

### Stand der Technik

Doppelschneckenextruder und deren Gehäuse sind seit langer Zeit bekannt. Oft sind die Gehäuse aus mehreren Gehäuseabschnitten zusammengesetzt, die in Axialrichtung hintereinander liegen und miteinander verschraubt sind.

Es ist üblich, die Schneckenbohrungen im Gehäuse bzw. in den Gehäuseabschnitten zu härten, weil hier sehr starker Verschleiß auftritt. So kann das Gehäuse z.B. aus vergütetem Nitrierstahl bestehen. Das Gehäuse wird nach der mechanischen Bearbeitung auf das Fertigmaß nitriert und erreicht so die gewünschte Härte und das gewünschte Verschleißverhalten. Nachteilig ist, dass nach einem Abtrag von ca. 0,1 mm die Nitrierschicht verbraucht ist und der Verschleiß dann im weichen Material wesentlich rascher voranschreitet. Solch ein Gehäuse bzw. Gehäuseabschnitt kann nicht mehr regeneriert werden, es bzw. er muss ersetzt werden.

Eine andere Möglichkeit besteht darin, die Schneckenbohrungen größer zu fertigen und dann eine Buchse mit z.B. 10 mm Wandstärke einzubringen. Wenn die Buchse verschlissen ist, kann diese gewechselt werden. Nachteilig ist hier der höhere Wärmeübergangswiderstand zwischen Buchse und Gehäuse, weil die Buchse nur eingepresst ist.

Verschiedene Verfahren zum Härten sind in der DE 10048870 C beschrieben. Besonders hingewiesen werden soll auf Absatz 6, wo erwähnt ist, dass man in die Schneckenbohrung einen Voll- oder Hohlkern einbringt, in den Zwischenraum zwischen dem Kern und dem Gehäuse eine Metall/Karbidpulvermischung einfüllt und dieses mit den Schneckenbohrungen mittels des HIP-Verfahrens (HIP = Heiß-Isostatisches Pressen) verbindet.

Beim HIP-Verfahren wird das HIP-Material in Pulverform bei über 1000 bar und 1250°C verdichtet. Dafür ist ein Metallgehäuse notwendig, das gasdicht verschweißt ist. (Gasdicht auch bei diesen Temperaturen!) Die Metallkapsel wird befüllt und hoch evakuiert. Es können pulvermetallurgisch hergestellte Legierungen, deren Legierungsgehalt nicht den Gesetzen der Löslichkeit und den Phasendiagrammen unterliegt, eingesetzt werden. Das hergestellte Material ist seigerungsfrei und hat ein isotropes, feinstkörniges Gefüge.

Funktionelle Werkstoffe, z.B. Metall/Karbidpulvermischungen, sind relativ teuer. Bei diesem bekannten Verfahren ist nachteilig, dass die gesamte Mantelfläche der Schneckenbohrungen mit dem teuren Material vergütet wird.

Ähnliche Gehäuse sind aus der JP 04-344218 A und aus der JP 04-368834 A bekannt. Hier ist allerdings nur die gehärtete Schicht innen in Form zweier überlappender Bohrungen ausgebildet, die Grenzschicht zwischen dem Gehäusematerial und der gehärteten Schicht ist oval. Damit ergibt sich ein Gehäuse, bei dem die Schneckenbohrungen in radialen Teilbereichen (nämlich genau in der Symmetrieebene zwischen den beiden Bohrungen) eine dickere gehärtete Schicht aufweisen als in anderen radialen Teilbereichen.

Ein Gehäuse der eingangs genannten Art für einen Doppelschneckenextruder ist aus der DE 29913316 U bekannt, siehe insbesondere Fig. 5. Hier ist bereits die Idee beschrieben, nur in einem bestimmten Winkelbereich der Bohrungen verschleißfeste Materialien vorzusehen, und zwar in jenen Bereichen, die dem größten Verschleiß ausgesetzt sind. Dies ist etwa im Bereich von 10-12 Uhr bei der linken Schnecke und im Bereich 12-2 Uhr bei der rechten Schnecke der Fall. Gemäß dieser Schrift handelt es sich bei den verschleißfesten Materialien um Einsatzstücke, die etwas vorstehen.

Aus der US 5752770 A ist bekannt, die verschleißfeste Schicht bündig mit der verbleibenden Oberfläche anzuschließen, wenn auch in einem etwas anderen Winkelbereich.

Problematisch ist die Herstellung derartiger Gehäuse. Gemäß der DE 29913316 U werden die Einsatzstücke getrennt hergestellt und mit Spannschrauben in Nuten des Gehäuses befestigt. Einerseits ist die Herstellung von Nuten über die Länge eines Extruder-Gehäuses schwierig, anderseits ist bei den extrem hohen Kräften in einem Extruder auch die Befestigung mit Spannschrauben nicht ausreichend zuverlässig. In der US 5752770 A wird Schweißen vorgeschlagen, was aber in den relativ dünnen, langen Bohrungen für die Extruderschnecken auch nicht einfach durchzuführen ist.

### Offenbarung der Erfindung

### Technische Aufgabe

Es ist Aufgabe der vorliegenden Erfindung, das Verfahren der eingangs genannten Art bzw. das Gehäuse bzw. den Gehäuseabschnitt der eingangs genannten Art so zu verbessern, dass die Verbindung leichter herzustellen und dennoch zuverlässiger ist.

### Technische Lösung

Dies wird durch das Verfahren der eingangs genannten Art erfindungsgemäß dadurch gelöst, dass zunächst in das volle Gehäuse bzw. den vollen Gehäuseabschnitt Hilfsbohrungen eingebracht werden, die im späteren Rand der Schneckenbohrungen liegen und sich vorzugsweise überlappen, dass danach die Schneckenbohrungen gebohrt werden und dass die gehärtete Schicht im Bereich der Hilfsbohrungen vorzugsweise durch Diffusionsverbinden, insbesondere durch das HIP-Verfahren, aufgebracht wird.

Im Gegensatz zum Stand der Technik wird also nicht mit dem Bohren der Schneckenbohrungen begonnen, in die dann nachher Vertiefungen eingebracht werden müssen, sondern es werden zunächst Hilfsbohrungen angebracht, und zwar in dem Bereich, der dann im Rand der Schneckenbohrungen liegt. Wenn dann die Schneckenbohrungen angebracht werden, ergeben sich durch die Hilfsbohrungen automatisch die Vertiefungen.

Auch wenn hier von Hilfsbohrungen gesprochen wird, so müssen diese nicht unbedingt durch Bohren hergestellt werden. Sie können ebenso gefräst oder auf sonstige Weise hergestellt werden. Die Hilfsbohrungen müssen auch nicht durch das gesamte Gehäuse bzw. den gesamten Gehäuseabschnitt durchgehen, wenn eine gehärtete Schicht über einen Teil der axialen Länge genügt.

Vorzugsweise wird die funktionelle Schicht in den Hilfsbohrungen gebildet, bevor die Schneckenbohrungen gebohrt werden.

In diesem Fall werden also zunächst Hilfsbohrungen angebracht, in diese wird vorzugsweise HIP-Material eingebracht und mittels des HIP-Verfahrens verfestigt. Danach werden die Schneckenbohrungen - nun wieder im vollen Material - ausgeführt. Es ist dabei natürlich günstig, wenn die Schneckenbohrungen hergestellt werden, bevor das HIP-Material seine endgültige Festigkeit erreicht hat. Andernfalls besteht die Gefahr, dass die Bohrungen sich verlaufen. Sollten die Schneckenbohrungen später angebracht werden müssen, lässt sich dieses Problem dadurch vermeiden, dass man zuerst eine Zentrierbohrung anbringt und dann die Schneckenbohrung ziehbohrt, und dabei das Gestänge durch die Führungsbohrung geführt wird.

Alternativ dazu ist es aber auch möglich, dass zunächst die Hilfsbohrungen und die Schneckenbohrungen gebohrt werden, dass dann in die Schneckenbohrungen ein Kern eingesetzt wird und danach die gehärtete Schicht gebildet wird.

Wenn der Kern exakt in die Schneckenbohrungen eingepasst ist, dann befindet sich das gehärtete Material ausschließlich im Bereich der Hilfsbohrungen. Wenn dessen Durchmesser etwas geringer ist, so kann die gesamte Mantelfläche der Schneckenbohrungen mit dem gehärteten Material beschichtet werden, wobei aber das gehärtete Material im Bereich der Hilfsbohrungen entsprechend dicker ist.

Es ist günstig, wenn der Kern rohrförmig ist. Auf diese Weise benötigt man zu dessen Herstellung nur wenig Material.

Dies ist vor allem dann günstig, wenn es sich um einen sog. verlorenen Kern handelt, das heißt, dass der Kern nach Herstellung der gehärteten Schicht herausgebohrt wird.

Es ist aber auch möglich, den Kern z.B. keramisch zu beschichten, bevor er in die Schneckenbohrung eingesetzt wird, und den Kern zu entfernen, nachdem die gehärtete Schicht mittels des HIP-Verfahrens hergestellt wurde. Durch die Bedingungen, unter denen das HIP-Verfahren durchgeführt wird, wird die Beschichtung des Kerns zerstört, sodass dieser keine Verbindung mit dem gehärteten Material eingeht. Der Kern kann daher entfernt werden und - nachdem er neuerlich beschichtet wurde - wieder verwendet werden.

Der Werkstoff für die gehärtete Schicht kann als Pulver eingebracht werden, es kann aber auch zunächst ein Festkörper der gewünschten Form hergestellt werden und dieser Festkörper dann eingebracht werden.

Ein Gehäuse bzw. Gehäuseabschnitt für Doppelschneckenextruder gemäss dem Oberbegriff des Patentanspruchs 8 ist erfindungsgemäß dadurch gekennzeichnet, dass die gehärtete Schicht mit dem restlichen Gehäuse bzw. Gehäuseabschnitt diffusionsverbunden ist. Dadurch ergibt sich eine extrem zuverlässige Verbindung zwischen der gehärteten Schicht und dem Gehäuse, und dennoch ist nur wenig Material notwendig, weil die gehärtete Schicht ausschließlich oder jedenfalls überwiegend nur in jenem Bereich vorgesehen ist, der dem größten Verschleiß unterliegt.

### Kurze Beschreibung der Zeichnungen

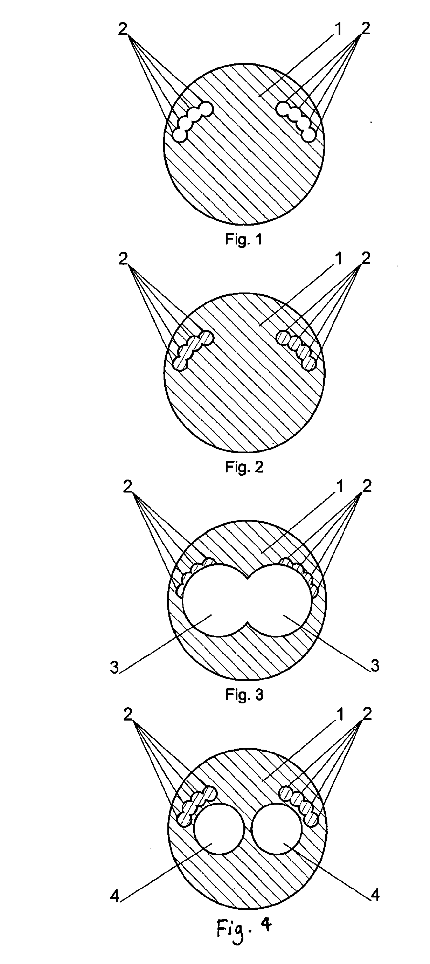

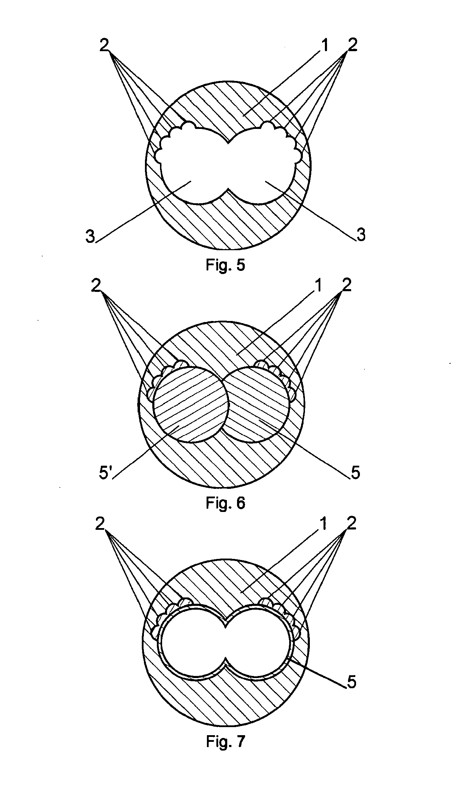

Anhand der beiliegenden Zeichnung wird die vorliegende Erfindung näher erläutert. Die Fig. 1-8 zeigen jeweils einen Querschnitt durch einen Gehäuseabschnitt eines Extruders zu verschiedenen Zeitpunkten während der Herstellung.

### Ausführungsform(en) der Erfindung

Ein Extruder kann in axialer Richtung in verschiedene funktionelle Abschnitte unterteilt werden, typische Abschnitte sind die Kompressionszone, die Dekompressionszone und die Metering-Zone. In der Kompressionszone tritt viel Verschleiß auf, in der Dekompressionszone, die zum Entgasen dient, nur wenig, und in der Metering-Zone, an deren Ende die Extruderdüse anschließt, tritt wieder viel Verschleiß auf. Die vorliegende Erfindung wird vorzugsweise in jenen Abschnitten eingesetzt, wo hoher Verschleiß auftritt.

In einen Gehäuseabschnitt 1 (z.B. für die Metering-Zone), der aus Nitrierstahl besteht, werden zunächst Hilfsbohrungen 2 angebracht (siehe Fig. 1). Diese Hilfsbohrungen 2 überlappen einander, und zwar in dem Bereich, der dem zukünftigen Rand der Schneckenbohrungen entspricht. Diese Bohrungen können, müssen aber nicht durch den gesamten Gehäuseabschnitt 1 durchgehen. (Im Falle der Metering-Zone kann man die Hilfsbohrungen 2 von dem Ende aus bohren, wo die Düse später angebracht werden soll, und vor dem gegenüberliegenden Ende, das an die Dekompressionszone anschließt, enden lassen.)

In diese Bohrungen bringt man nun HIP-Material ein, z.B. Carbonstahl, und führt das HIP-Verfahren durch (Fig. 2). Der eingebrachte Stahl ist unmittelbar danach noch weich. Man kann daher sofort die Schneckenbohrungen 3 einbringen (siehe Fig. 3). Bei den nun folgenden Wärmebehandlungen bildet man die gewünschten Eigenschaften der Oberfläche aus. In Fig. 3 ist der fertige Gehäuseabschnitt 1 zu sehen.

Sollte das Material in den Hilfsbohrungen 2 größere Härteunterschiede im Vergleich zum Gehäusewerkstoff aufweisen, dann ist es zweckmäßig, zuerst Führungsbohrungen 4 anzubringen (siehe Fig. 4). Diese Führungsbohrungen 4 werden dann z.B. mit einem Ziehbohrwerk zu den Schneckenbohrungen 3 (siehe Fig. 3) aufgebohrt.

Wenn man carbidbeschichtete Schnecken verwendet, ist es Stand der Technik, Hartstoffschichten einzusetzen. In diesem Fall ist es notwendig, zunächst die Hilfsbohrungen 2 und dann die Schneckenbohrungen 3 anzubringen (siehe Fig. 5). Nun bringt man einen Kern 5 in die Schneckenbohrungen ein, der diese verschließt, und bringt in den verbleibenden Hohlraum (also in die jeweils freien Hälften der Hilfsbohrungen 2) das Material für die Hartstoffschicht ein (Fig. 6), das in der Folge dem HIP-Verfahren unterworfen wird. Wenn der Kern 5 zuvor z.B. mit einer Keramikschicht gecoatet wurde, kann er nach dem HIP-Verfahren entfernt und wieder verwendet werden. Andernfalls wird auch er mit der Hartstoffschicht diffusionsverbunden und muss ausgebohrt werden, wobei aber die Hartschicht nicht berührt wird. Der Kern kann auch rohrförmig sein (Fig. 7)

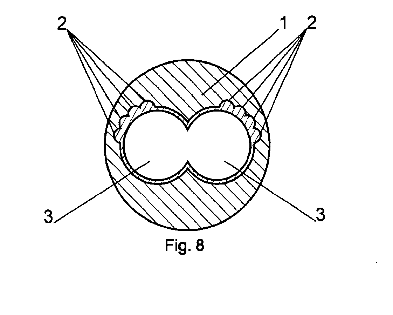

Weiters ist es auch möglich, dass der Kern einen etwas geringeren Durchmesser hat als die Schneckenbohrungen, sodass sich die Hartstoffschicht über den gesamten Umfang der Schneckenbohrungen 3 erstreckt, im Bereich der Hilfsbohrungen 2 aber dicker ist. Dies ist in Fig. 8 dargestellt.

## Patentansprüche

1. Verfahren zur Herstellung eines Gehäuses oder eines Gehäuseabschnitts (1) für einen Doppelschneckenextruder, dessen überlappende Schneckenbohrungen (3) entweder nur in radialen Teilabschnitten gehärtet sind oder dessen überlappende Schneckenbohrungen (3) in radialen Teilbereichen eine dickere gehärtete Schicht aufweisen als in anderen radialen Teilbereichen, **dadurch gekennzeichnet, dass** zunächst in das volle Gehäuse bzw. den vollen Gehäuseabschnitt (1) Hilfsbohrungen (2) eingebracht werden, die im späteren Rand der Schneckenbohrungen (3) liegen und sich vorzugsweise überlappen, dass danach die Schneckenbohrungen (3) gebohrt werden und dass die gehärtete Schicht im Bereich der Hilfsbohrungen (2) vorzugsweise durch Diffusionsverbinden, insbesondere durch das HIP-Verfahren, aufgebracht wird.

2. Verfahren nach Anspruch 1, **dadurch gekennzeichnet, dass** die gehärtete Schicht in den Hilfsbohrungen (2) gebildet wird, bevor die Schneckenbohrungen (3) gebohrt werden.

3. Verfahren nach Anspruch 1, **dadurch gekennzeichnet, dass** zunächst die Hilfsbohrungen (2) und die Schneckenbohrungen (3) gebohrt werden, dass dann in die Schneckenbohrungen (3) ein Kern (5) eingesetzt wird und danach die gehärtete Schicht gebildet wird.

4. Verfahren nach Anspruch 3, **dadurch gekennzeichnet, dass** der Kern (5) rohrförmig ist.

5. Verfahren nach Anspruch 3 oder 4, **dadurch gekennzeichnet, dass** der Kern (5) nach Herstellung der gehärteten Schicht herausgebohrt wird.

6. Verfahren nach Anspruch 3 oder 4, **dadurch gekennzeichnet, dass** man den Kern (5) z.B. mit einer Keramik beschichtet, die sich nicht mit der HIP-Schicht verbindet, bevor er in die Schneckenbohrung (3) eingesetzt wird, und ihn entfernt, nachdem die gehärtete Schicht mittels des HIP-Verfahrens hergestellt wurde.

7. Verfahren nach einem der Ansprüche 1 bis 6, **dadurch gekennzeichnet, dass** der Werkstoff für die gehärtete Schicht als Pulver oder als Festkörper eingebracht wird.

8. Gehäuse oder Gehäuseabschnitt (1) für einen Doppelschneckenextruder, dessen überlappende Schneckenbohrungen (3) nur in radialen Teilabschnitten gehärtet sind **dadurch gekennzeichnet, dass** die gehärtete Schicht mit dem restlichen Gehäuse bzw. Gehäuseabschnitt (1) diffusionsverbunden ist.

## Claims

1. Method for producing a housing or a housing portion (1) for a double screw extruder, of which either the overlapping screw bores (3) are cured only in radial portions or the overlapping screw bores (3) comprise a thicker cured layer in some radial regions than in other radial regions, **characterised in that** auxiliary bores (2) are first provided in the entire housing or the entire housing portion (1), are arranged at the outer edge of the screw bores (3) and preferably overlap, **in that** the screw bores (3) are subsequently drilled, and **in that** the cured layer is applied in the region of the auxiliary bores (2), preferably by means of diffusion, in particular by means of the HIP process.

2. Method according to claim 1, **characterised in that** the cured layer is formed in the auxiliary bores (2) before the screw bores (3) are drilled.

3. Method according to claim 1, **characterised in that** the auxiliary bores (2) and the screw bores (3) are drilled first and **in that** a core (5) is then inserted into the screw bores (3) and the cured layer is then formed.

4. Method according to claim 3, **characterised in that** the core (5) is tubular.

5. Method according to either claim 3 or claim 4, **characterised in that** the core (5) is drilled out once the cured layer has been produced

6. Method according to either claim 3 or claim 4, **characterised in that** the core (5) is coated, for example with a ceramic which does not combine with the HIP layer, before said core is inserted into the screw bore (3), and is removed once the cured layer has been produced using the HIP process.

7. Method according to any one of claims I to 6, **characterised in that** the material for the cured layer is used as a powder or as a solid.

8. Housing or housing portion (1) for a double screw extruder, of which the overlapping screw bores (3) are only cured in radial portions, **characterised in that** the cured layer is bonded to the rest of the housing or housing portion (1) by means of diffusion.

## Revendications

1. Procédé de fabrication d'un corps ou d'une section de corps (1) d'une extrudeuse à double vis, dont les alésages à vis chevauchants (3) sont traités uniquement dans des régions partielles radiales, ou dont les alésages à vis chevauchants (3) présentent, dans certaines régions partielles radiales, une couche dure plus épaisse que dans d'autres régions partielles radiales,
**caractérisé en ce que**
l'on réalise d'abord des alésages auxiliaires (2) dans le corps plein, voire dans la section de corps pleine (1), qui se situent dans ce qui sera plus tard la périphérie des alésages à vis (3), et qui se chevauchent de préférence,
qu'ensuite on perce les alésages à vis (3), et
que la couche dure est appliquée au niveau des alésages auxiliaires (2), de préférence par liaison par diffusion, en particulier par procédé CIC.

2. Procédé selon la revendication 1,
**caractérisé en ce que**
la couche dure est formée à l'intérieur des alésages auxiliaires (2), avant que les alésages à vis (3) ne soient percés.

3. Procédé selon la revendication 1,
**caractérisé en ce que**
l'on perce d'abord les alésages auxiliaires (2) et les alésages à vis (3),
qu'ensuite on introduit un noyau (5) dans les alésages à vis (3), et
qu'enfin on forme la couche dure.

4. Procédé selon la revendication 3,
**caractérisé en ce que** le noyau (5) est de forme tubulaire.

5. Procédé selon la revendication 3 ou 4,
**caractérisé en ce**
**qu'**après la réalisation de la couche dure, le noyau (5) est enlevé par perçage.

6. Procédé selon la revendication 3 ou 4,
**caractérisé en ce que**
le noyau (5) est revêtu d'une couche de céramique, par exemple, qui ne se lie pas à la couche CIC, avant son insertion dans l'alésage à vis (3), et
qu'on le retire après que la couche dure a été formée au moyen du procédé CIC.

7. Procédé selon l'une des revendications 1 à 6,
**caractérisé en ce que**
la matière de la couche dure est introduite sous forme d'une poudre ou d'un corps solide.

8. Corps ou section de corps (1) d'une extrudeuse à double vis dont les alésages à vis chevauchants (3) sont traités uniquement dans des régions partielles radiales,
**caractérisé(e) en ce que**
la couche dure est liée par diffusion au reste du corps ou de la section de corps (1).
